(19) Europäisches Patentamt
European Patent Office
Office européen des brevets

(11) EP 4 538 650 A1

(12) EUROPEAN PATENT APPLICATION

(43) Date of publication:
16.04.2025 Bulletin 2025/16

(21) Application number: 23202764.9

(22) Date of filing: 10.10.2023

(51) International Patent Classification (IPC):
G01D 5/353 (2006.01)

(52) Cooperative Patent Classification (CPC):
G01D 5/35316; G01D 5/35306

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Nederlandse Organisatie voor
toegepast-natuurwetenschappelijk Onderzoek
TNO
2595 DA 's-Gravenhage (NL)

(72) Inventors:
• CHENG, Lun-Kai
  2595 DA 's-Gravenhage (NL)
• DE JONG, Willem
  2595 DA 's-Gravenhage (NL)
• VAN NEER, Paul Louis Maria Joseph
  2595 DA 's-Gravenhage (NL)

(74) Representative: V.O.
P.O. Box 87930
2508 DH Den Haag (NL)

(54) **SENSOR ARRANGEMENT FOR MEASURING A PHYSICAL PARAMETER**

(57) The invention is directed at a sensor arrangement for measuring a physical parameter. The sensor arrangement includes a fiber grating sensor and an optical sensor for determining a wavelength characteristic of an output signal from the fiber grating sensor. The optical sensor comprises a radiation source and an interferometer, wherein the interferometer is configured for providing a combined signal from two mutually phase delayed fractions of the output signal to an output port to generate an output interference signal for enabling determination of the wavelength characteristic by an analyzer operatively connectable to the output port via the calculation of the phase of the output interference signal. The fiber grating sensor is a phase shifted type fiber grating sensor. Thereby a sensor arrangement is provided having a very high measurement resolution, enabling highly accurate measurement of strain or pressure on a sample, both statically and dynamically.

## Fig. 1

**Description**

Field of the invention

Sensor arrangement for measuring a physical parameter, the sensor arrangement comprising a fiber grating sensor, and an optical sensor for interrogating the fiber grating sensor for determining a wavelength characteristic of an optical output signal obtained from the fiber grating sensor, wherein the fiber grating sensor comprises a fiber section including an internal structural periodicity comprising a repetition of structural periods of a same length such as to reflect, upon receiving an optical interrogation signal in use, optical radiation in a reflection spectral bandwidth around a reflection wavelength that corresponds with the length of the structural periods, wherein the optical sensor comprises a radiation source for illuminating the fiber grating sensor with the optical interrogation signal, and an interferometer configured for receiving the optical output signal from the fiber grating sensor.

Background

Fiber grating sensors, such as fiber Bragg grating (FBG) sensors, are widely used for measuring static and dynamic mechanical behavior of structures and objects. The fiber grating sensors consist of a fiber wherein a periodic structure of refractive index variations having an as accurate as possible periodicity is present. Upon illuminating the fiber grating sensor, the structural periodicity causes one wavelength that matches the periodicity (i.e. periodic length of each structural period) to be reflected by the grating whilst the remaining wavelengths of the optical radiation are transmitted. Putting the sensor under longitudinal strain will cause the grating periodicity to change, in the sense that the force exerted on the grating will cause the grating structure to be stretched or compressed. The result thereof will be that the reflected wavelength will shift, i.e. shorten upon compressing the fiber grating sensor and extend upon stretching the fiber grating sensor. This enables the accurate detection of all kinds of physical parameters, such as temperature variations, pressure variations, , vibrations (such as acoustic vibrations), and strain variations, which can be used in a wide range of applications such as monitoring of the structural integrity of objects (solar panels, vehicles, vessels) and structures (buildings, wind turbines, bridges, roads, pipelines) under influence of thermal stress, vibrations, in use and during manufacturing and development.

The standard interrogation technologies of commercial systems (scanning laser, scanning optical filter, spectrometer) are not always sensitive enough under all circumstances. For example, to detect low amplitude high frequency signals e.g. induced by acoustic or elastic waves in mechanical constructions, the wavelength shift is only marginal and may be hidden within noise signals of various origins. One of the reasons for this is the "rough" wavelength sampling step of the interrogation systems applied (typically a few picometer for the scanning type of interrogator to sub-nanometer for spectrometer type). A fine wavelength sampling requires extreme accurate wavelength measurement control technology. Furthermore, fine wavelength sampling corresponds to more wavelength steps, which increases the measurement time for a wavelength scanning system. These shortcomings diminish the accuracy and resolution of measurements performed using sensor arrangements based on fiber grating sensors.

Summary of the invention

It is an object of the present invention to overcome the disadvantages of the prior art, and to provide a sensor arrangement as described above having a very high measurement resolution and enabling highly accurate measurement of strain, temperature or pressure on a sample.

To this end, in accordance with a first aspect, there is provided herewith a sensor arrangement as described above, wherein the interferometer is configured for separating from the optical output signal a first signal fraction and a second signal fraction, the interferometer including one or more optical elements for establishing a phase difference between the first signal fraction and the second signal fraction, and wherein the interferometer is further configured for combining the first and second signal fraction into a combined interference signal, for providing the combined signal to at least one output port for enabling determination of the wavelength characteristic by an analyzer operatively connectable to the at least one output port. The fiber grating sensor is a phase shifted type fiber grating sensor wherein the internal structural periodicity comprises an interruption thereof, the interruption being provided by a deviation in at least one structural period, such as to enable the fiber grating sensor to transmit, upon receiving the optical interrogation signal, at least one fraction of the reflected optical radiation, wherein the at least one fraction comprises optical radiation in a transmission spectral bandwidth around a transmission wavelength that corresponds with the interruption.

In the above, it has been realized that improving the detectability of small wavelength shifts from the fiber grating sensor, may be achieved by increasing the wavelength-to-phase scale factor of the interferometer. Although this may be achieved by increasing a path difference (i.e. the path difference providing the phase difference) between the first signal fraction and the second signal fraction in a two-beams interferometer, in order to do so without diminishing the interferometric visibility (which would increase the phase noise), the coherence length of the light submitted to the interferometer must be increased as well. This, in turn, may be achieved by decreasing the spectral bandwidth of the fiber grating sensor. However typically for these type of sensors (such as a fiber bragg grating (FBG)) this will require the sensor to be longer, resulting often in unpractically long fiber grating sensors (since the reflection bandwidth of a standard FBG is inversely related to the length of the grating).

In accordance with the present invention, a decrease in spectral bandwidth has been achieved by using a phase shifted type fiber grating sensor. In a phase shifted type fiber grating sensor, the internal structural periodicity comprises an interruption or defect resulting in a phase shift of the internal periodic structure. The interruption or defect is provided by a deviation in at least one structural period, thus there is at least one structural period that deviates from the other structural periods (alternatively, there may also be two, three, four, five, six ..... multiple structural periods that deviate). The length of this deviation can be suitably determined by the person skilled in the art, however, good results have been achieved with deviations having a length between 0.4 to 1.6 times the length of a structural period, for example one half of a period. Note that a deviation of exactly one period is in fact not a deviation, but just another structural period added. To give an example, if the original periodic structure is written as 101010101010 (one period being '10') then adding a disturbance of '10' (as underlined) 10101010101010 has no effect. If the added change is for example half a periodic structure, the periodicity for example becomes 1010100101010 or 1010101101010.

The result of this or these deviations is that the reflection spectrum of the fiber grating sensor has a narrow and deep reflection notch, because it selectively transmits (rather than reflects) a sharply defined wavelength somewhere within the reflection spectral bandwidth. At the same time, the transmitted fraction of the reflected optical radiation forms a sharp peak within a transmission spectral bandwidth around a transmission wavelength that corresponds with the interruption. The spectral bandwidth of the transmitted fraction is very small, much smaller than the spectral bandwidth of the reflection spectrum (typically a factor 10-100, where the reflection spectral bandwidth may be around 100 picometer and the transmission spectral bandwidth of the peak is around 10-1 picometer, dependent on the exact design of the grating with the interruption).

In the present invention, use of a phase-shifted fiber grating sensor enables to obtain a signal having a very small spectral bandwidth. Instead of using the full reflective spectrum for measurement, only the sharply defined wavelength that is significantly diminished in the reflective spectrum, but which is present in the transmission spectrum of the phase-shifted fiber grating sensor, is used for performing the measurements. Therefore, as a result the coherence length is greatly increased by the smaller wavelength bandwidth and therefore the optical path length may be much larger. This provides a larger wavelength-to-phase scale factor for the interference signal, and thus smaller wavelength differences will become measurable using an interferometric interrogation system. Hence, by using a phase-shifted fiber grating sensor (and in particular the transmitted wavelength that is absent in the reflective spectrum of the sensor) the wavelength resolution (the smallest possible wavelength shift that is still measurable) is significantly improved. Thereby, a very high measurement resolution and highly accurate measurement of strain or pressure on a sample, both statically and dynamically, is achieved. Parameters that are measurable via static or dynamic stress or pressure measurements, may likewise be measured at high accuracy, such as temperature changes or the distribution of sonic waves (e.g. ultrasound).

A suitable type of phase shifted fiber grating sensor for use in various examples of the sensor arrangement is a pi-shifted fiber bragg grating. A pi-shifted (i.e. 'π-shifted') fiber bragg grating is characterized by a n-phase shift included in the refractive index modulation as an interruption of the internal periodic structure of the fiber grating sensor. In these types of fiber grating sensors, the sharp and deep notch in the reflection spectrum is present in the middle of the reflection bandwidth. Hence, the wavelength corresponding with the notch in the reflection spectrum is transmitted by the pi-shifted fiber grating sensor. However, variations other than the one described here in relation to the pi-shifted fiber grating sensor may likewise be present in the periodic internal structure, which therefore may give rise to a different reflection spectrum. For example, by providing a different phase shift of more or less than $\pi$ (e.g. 6/5 $\pi$ or 3/4 $\pi$, or any other phase shift of less than $2\pi$), the notch in the reflection spectrum will be in a different location than in the middle thereof. Furthermore, by providing multiple interruptions in the internal periodic structure, multiple notches will be present (i.e. leading to multiple wavelengths being (at least partially) transmitted). In the present document, most of the described principles will be explained using a pi-shifted (i.e. 'π-shifted') fiber bragg grating as exemplary fiber grating sensor. However, it is to be understood that this is merely an example, and other types of phase shifted fiber grating sensors may likewise be applied in order to achieve the same or similar advantages as described herein. The exemplary use of a single pi-shifted (i.e. 'π-shifted') fiber bragg grating is thus not to be considered limiting on the inventive principles described herein.

In some examples, a sensor arrangement is provided wherein the interruption of the phase shifted type fiber grating sensor comprises a divergent structural period, the divergent structural period including a disruption of the internal structural periodicity, such as one or more of: a continuous refractive index for transmitting optical radiation unhampered; a discontinuity of the refractive index such as a step or a kink. The disruption may be any type of disruption that provides a phase shift in the internal periodic structure. In examples applying multiple phase shifts, multiple disruptions of same or different nature may be provided that will give rise to the different phase shifts of less then $2\pi$.

As described, some examples may provide a sensor arrangement wherein the divergent structural period has a length equal to half of the length of the structural periods forming the internal structural periodicity, such that the phase shifted type fiber grating sensor is a $\pi$-shifted fiber grating sensor. In some further or the same examples, the divergent structural period has a length which is less than the length of the structural periods forming the internal structural periodicity, such that the phase shifted type fiber grating sensor provides a phase-shift of less than $2\pi$. The transmission peak or fraction of the reflection wavelength that is transmitted rather than reflected will include a peak at a corresponding location within the reflection spectral bandwidth. Yet in some other examples, the interruption of the phase shifted type fiber grating sensor comprises two or more divergent structural period, wherein each divergent structural period includes a disruption of the internal structural period, wherein each divergent structural period has a different length which is less than the length of the structural periods forming the internal structural periodicity, such as to enable the fiber grating sensor to transmit, upon receiving the optical interrogation signal, two or more fractions of the reflected optical radiation at different wavelengths within the reflection spectrum. If multiple transmission peaks are provided by the fiber grating sensor, these may all be analyzed in order to provide more measurements and/or a more accurate measurement. An example of more measurements is one for strain and the other one for temperature, or one for temperature and the other one for pressure, or one for vibrations or dynamic variations and another one for static strain, or a combination of three parameters that are to be monitored.

In some examples there is provided a sensor arrangement wherein the fiber grating sensor is configured for reflecting, upon receiving the optical interrogation signal in use, optical radiation at a plurality of reflection wavelengths in a spectral bandwidth of the fiber grating sensor, wherein the sensor arrangement further comprises an optical wavelength filter, the optical wavelength filter being configured for transmitting a wavelength range within the reflection spectral bandwidth of the fiber grating sensor. Preferably, only the sharp transmitted fraction will be provided as input to the analyzer system. The wavelengths outside the considered field are preferably filtered from the filter output signal, as these may add to the interferometer phase noise present. Filtering the optical output signal such that it will transmit the fraction around the transmission spectral bandwidth around the transmission wavelength that corresponds with the interruption, and such that it will block wavelengths further outside this transmission spectral bandwidth, will prevent phase noise that may otherwise be added as a result of such undesired wavelengths being present in the interferometer output signal. If the phase shifted fiber grating sensor comprises multiple interruptions which each provide a different phase shift, multiple fractions will be transmitted. In that case, an optical wavelength filter (or multiple optical wavelength filters) may transmit each of these fractions. For example, an optical wavelength filter may transmit a wavelength range including all fractions. Alternatively, an optical wavelength filter or multiple filters (i.e. a filter system) may selectively transmit either fraction. The latter may be advantageous in order to selectively perform measurements on each fraction, without the other transmitted fraction adding noise during the measurements if the different fractions are used for separate measurements.

In some examples of a sensor arrangement, the interferometer is operatively connected to an output side of the fiber grating sensor such as to obtain, as the optical output signal, a transmitted signal from the fiber grating sensor comprising optical radiation which is void of the reflection wavelength. As may be appreciated, the phase shifted fiber grating sensor preferably is interrogated in transmission of the fiber grating, connecting the interferometer or alternative sensor system to the output of the phase shifted fiber grating sensor. This provides for a convenient setup that enables highly accurate measurement of the wavelength shifts that are indicative of changes in the physical parameters.

In accordance with some other or further exemplary sensor arrangements, the sensor arrangement further comprises a further interferometer which is operatively connected to an input side of the fiber grating sensor such as to obtain, as a reference signal of the optical output signal, a reflected signal from the fiber grating sensor comprising optical radiation which comprises the reflection wavelength. The additional measurements may be performed on the reflection spectrum, providing additional information and/or a control signal. Furthermore, the absence of the transmitted fractions from the reflection spectrum may likewise be determined in order to provide an additional measurement, enabling to reduce measurement errors and thereby increase accuracy.

In accordance with some preferred exemplary implementations of sensor arrangements, the radiation source of the sensor arrangement is configured for providing an optical radiation signal comprising optical radiation at a plurality of discrete wavelengths, wherein the plurality of discrete wavelengths include at least three wavelengths overlapping with the spectral bandwidth of the fiber grating sensor to be interrogated. Preferably, the plurality of discrete wavelengths include at least three wavelengths overlapping with the transmission spectral bandwidth of the transmitted fractions of the phase shifted fiber grating sensor. For example, in certain preferred variants of sensor arrangements, the radiation source comprises a mode locked laser. The plurality of discrete wavelengths provides a frequency comb signal. The application of a frequency comb signal as interrogation signal reduces the amount of phase noise in the output signal considerably due to the reduction of the beat noise between the wavelengths, and therefore further adds to the accuracy of the sensor arrangement. A mode locked laser conveniently provides design freedom in wavelength and interval, for example in some cases to provide a frequency comb signal having tunable characteristics, such as a tunable mode locking wavelength or tunable wavelength interval. However, some exemplary sensor arrangements may advantageously apply different manners of providing a frequency comb signal, without departing from the present concept, and thereby providing a different way of applying an optical radiation signal comprising optical radiation at a plurality of discrete wavelengths, wherein the plurality of discrete wavelengths with constant optical frequency difference, include at least three wavelengths overlapping with the spectral bandwidth of the fiber grating sensor. Examples of other manners of providing equidistant frequencies (i.e. a frequency comb) that may likewise be applied in some examples, are provided herewith. In some examples, this may be achieved by using two high-power lasers of slightly different frequency and transmit their beams simultaneously through a photonic-crystal fiber, in order to create a frequency comb by four-wave mixing. Furthermore, another example would be to use a continuous-wave laser of which the amplitude and/or phase would be modulated with an external modulator driven by a radio-frequency source. Therefore, different implementations are available to the skilled person, the mode-locked-laser being preferred for achieving a high density (in frequency domain) of equidistant wavelengths in a convenient implementation.

In some other or further preferred and particularly advantageous examples of the sensor arrangements, the interferometer includes a first branch for conveying the first signal fraction and a second branch for conveying the second signal fraction, wherein the first branch and the second branch are of different length such as to establish a path length difference between the first signal fraction and the second signal fraction, and wherein the mode locked laser is configured for providing laser pulses at a fixed pulse repetition frequency, such that subsequent laser pulses are spatially separated by a fixed intermediate pulse distance; wherein the path length difference is within a range between N times the fixed intermediate pulse distance and N times the fixed intermediate pulse distance plus or minus a coherence length of the light from the fiber grating sensor, wherein N is an integer number that is greater than or equal to zero, wherein the coherence length is inversely proportional to the spectral bandwidth of the optical output signal received by the interferometer. In this respect, it is to be understood that a spatial separation between pulses is to be understood as physical distance between these pulses, which is therefore determined by the temporal separation between these pulses times the speed of light in the material wherein the pulses are conveyed; i.e. this material dependent speed equals the light speed c divided by the refractive index n of the material. Thus, the fixed intermediate pulse distance is the physical distance between two subsequent pulses, in the material of the fiber wherein the pulses are conveyed before recombination by the beam combiner of the interferometer. The path length difference in the interferometer, in accordance with these examples, may be an integer multiple times the fixed intermediate pulse distance or may be within a coherence length difference of an integer multiple times the fixed intermediate pulse distance. The major advantage thereof is that in these examples, interference is obtained between subsequent pulses or between two pulses separated by one or more other pulses. The optical path length difference in the interferometer will therefore be many times larger than the upper limit achievable with interference within a single pulse (which is limited to the coherence length). In these examples, the optical path length difference may become very large, thereby achieving a larger wavelength change to phase difference scale factor (which is proportional to the optical path difference).

In some sensor arrangements, the interferometer includes a first branch for conveying the first signal fraction and two or more second branches for conveying the second signal fraction, wherein each of the two or more second branches is of a length different from the first branch and different from each further second branch of the two or more second branches, and wherein the sensor arrangement comprises switching means for switching the second switching fraction to one of the two or more second branches. In these examples, the sensitivity of the sensor arrangement becomes selectable by operating the switching means.

A further example is provided by a sensor arrangement which comprises a plurality of fiber grating sensors, the plurality of fiber grating sensors forming a sensor array, wherein each fiber grating sensor of the plurality of fiber grating sensors is configured for reflecting, in use, optical radiation at an individual reflection wavelength associated with said fiber grating sensor, and wherein the sensor arrangement further comprises a filter arrangement configured for filtering the output signal and for selectively transmitting a wavelength range overlapping with one of the individual reflection wavelengths, for enabling selective interrogation of each of the plurality of fiber grating sensors. The sensor array is thereby configured for interrogating and monitoring multiple fiber grating sensors over time. For example, preferably the narrow transmission peak within the transmitted spectrum of each selected phase shifted fiber bragg grating will be transmitted.

A further example is provided by a sensor arrangement wherein the analyzer is configured for determining a wavelength shift of the reflected or transmitted wavelength in use (i.e. the wavelength shift at an output (transmitted or reflected) of the fiber grating sensor), for enabling dynamic measurement of the physical parameter, such as for enabling detection of ultrasonic waves. The application of sensing ultrasonic waves is just an example of a field of application of the sensor arrangements discussed in this document. The sensor arrangements may be applied in other situations in order to measure many types of dynamic or static mechanical parameters. For example, sensor arrangements of the type indicated may be applied to sense mechanical effects of temperature variations, or miniature motion or stress induced thereby on structures such as buildings, windmills, bridges, roads, machines, vessels, vehicles or other structures. However, the sensor arrangements may well be applied to sense ultrasonic waves within a material or even sound waves exterior to a material which may be 'felt' inside the material or at the surface thereof. In some examples of sensor arrangements, the physical parameter is at least one of: strain; compression; deformation; temperature; vibration, such as acoustic vibration; or pressure.

In accordance with a further aspect, the present document relates to a use of a sensor arrangement as described, for determining a wavelength shift of the reflected wavelength of a fiber grating sensor, for enabling dynamic measurement of the physical parameter, such as for enabling detection of ultrasonic waves.

Furthermore, in accordance with an aspect, there is provided a method of measuring a physical parameter using a sensor arrangement, wherein the sensor arrangement comprises a fiber grating sensor, and an optical sensor for interrogating the fiber grating sensor for determining a wavelength characteristic of an optical output signal obtained from the fiber grating sensor, wherein the fiber grating sensor comprises a fiber section including an internal structural periodicity comprising a repetition of structural periods of a same length such as to reflect, upon receiving an optical interrogation signal in use, optical radiation at a reflection wavelength that corresponds with the length of the structural periods, wherein the method comprises interrogating the fiber grating sensor for measuring said physical parameter, wherein the step of interrogating comprises: illuminating, with a radiation source, the fiber grating sensor with the optical interrogation signal; receiving, by an interferometer, the optical output signal from the fiber grating sensor; separating, by the interferometer, from the optical output signal, a first signal fraction and a second signal fraction; establishing, by the interferometer using one or more optical elements, a phase difference between the first signal fraction and the second signal fraction; combining, by the interferometer, the first and second signal fraction into a combined signal, and providing the combined signal via at least one output port to an analyzer; determining, by the analyzer, the wavelength characteristic for measuring the physical parameter; wherein, for enabling the measurement, the fiber grating sensor is a phase shifted type fiber grating sensor wherein the internal structural periodicity comprises an interruption thereof, the interruption being provided by a deviation in at least one structural period. In an exemplary method, the radiation source may be a mode locked laser.

Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:

Figure 1 illustrates an exemplary optical sensor arrangement corresponding to the present concepts;
Figure 2 illustrates a further exemplary optical sensor arrangement corresponding to the present concepts;
Figure 3 illustrates a further exemplary optical sensor arrangement corresponding to the present concepts;
Figure 4 illustrates a further exemplary optical sensor arrangement corresponding to the present concepts;
Figure 5 schematically illustrates a frequency comb signal provided by a mode-locked laser and how it relates to a reflection signal spectral bandwidth of a fiber grating sensor in examples of optical sensor arrangement corresponding to the present concepts;
Figure 6 illustrates a logarithmic graph indicative of how phase noise levels relate to interferometric visibilities;
Figures 7 and 8 provide a comparison of the phase noise (presented in an Amplitude Spectral Density (ASD) plot) between two sensor systems illustrative of potential advantages achievable with the present concepts;
Figure 9 illustrates a further exemplary optical sensor arrangement corresponding to the present concepts;
Figure 10A and 10B illustrate a reflected wavelength spectrum of a fiber Bragg grating;
Figure 11A and 11B illustrate a transmission wavelength spectrum of a phase shifted fiber Bragg grating;
Figure 12 illustrates a further exemplary optical sensor arrangement corresponding to the present concepts;
Figure 13 shows an example of a mode locked laser (MLL) output wherein multiple wavelengths with interrelated mutual phases resulting in a pulsed output;
Figure 14A and 14B provide a comparison of the phase noise between two sensor systems corresponding to the present concepts;
Figure 15 illustrates a further exemplary optical sensor arrangement corresponding to the present concepts;
Figure 16 illustrates a further exemplary optical sensor arrangement corresponding to the present concepts
Figure 17 illustrates a further exemplary optical sensor arrangement corresponding to the present concepts.

Detailed description

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

Many of the below exemplary sensor arrangements apply fiber grating sensors, such as fiber bragg gratings. Some of these examples illuminate these fiber bragg gratings with a specific type of illumination source, for example in order to provide a frequency comb signal using a mode-locked-laser. Other examples apply a regular continuous wave monochromatic optical source, such as a regular light source. Yet in some examples, the fiber grating sensor applied is a phase shifted fiber bragg grating, which is at least interrogated in transmission (i.e. the output signal transmitted by the phase shifted fiber bragg grating is analyzed to detect wavelength shifts). Whether interrogation in transmission or in reflection, or even both, is preferred or applied, depends on the design choice made and in some cases on the specifics of the sensor arrangement. For example, when the fiber grating sensor applied is a phase shifted fiber bragg grating, interrogation in transmission is certainly preferred in order to leverage the very small transmission bandwidth within the reflected signal spectral bandwidth of the fiber grating sensor. However, optionally the reflected signal may likewise be analyzed in addition to the transmission spectrum, in order to improve accuracy or for other reasons.

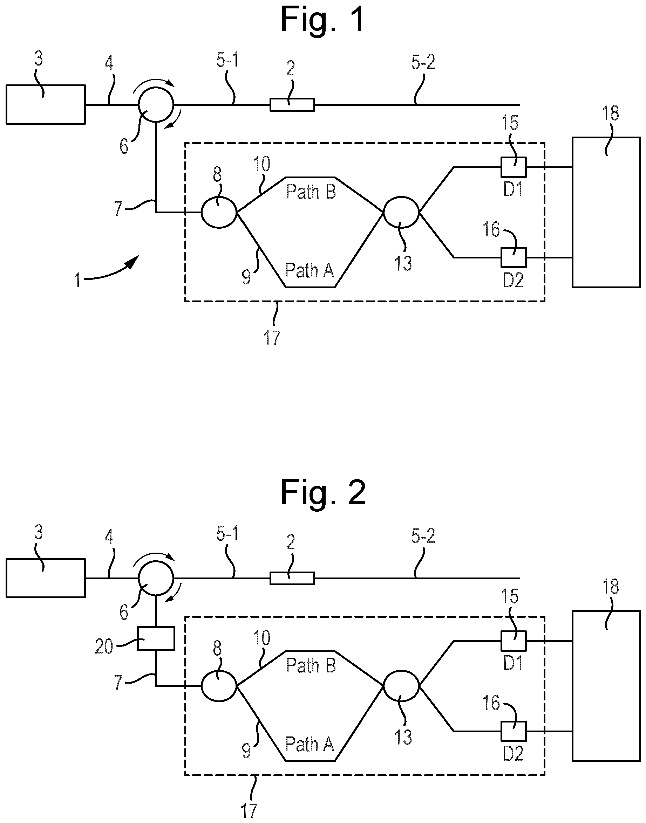

In figure 1, there is illustrated an optical sensor arrangement 1 for interrogating a fiber grating sensor 2. The fiber grating sensor may include for example any of: a fiber Bragg grating (FBG), long-period fiber grating, chirped fiber grating, tilted fiber grating, a sampled fiber grating or any other type of fiber grating sensor. The fiber grating sensor 2 is to be interrogated for determining a wavelength characteristic of an optical output signal obtained from the fiber grating sensor 2. Thereto, the fiber grating sensor 2 is operatively connected, using an optical conveyance structure including fibers 4 and 5-1 or other optical conveyors, to a radiation source 3. Radiation source 3 may be a single radiation unit or may comprise a system of radiation units. Radiation source 3 is of a type that is suitable to provide discrete wavelengths of radiation. For example radiation source 3 may comprise multiple radiation units in an arrangement, or may comprise other means suitable for providing a frequency comb signal. A frequency comb signal is a signal that includes a series of discrete wavelengths, for example these discrete wavelengths may include a precise and regular series of wavelengths that are equidistant in the frequency domain. Alternatively, the wavelengths may not be equidistant. These wavelengths are often generated using one or more lasers or a laser system, although the skilled person will recognize that there are other manners of providing a frequency comb signal.

The fiber grating sensor 2 comprises a fiber section, which includes an internal structural periodicity in order to reflect, upon receiving an optical interrogation signal in use, optical radiation at a reflection wavelength that is dependent on the internal structural periodicity. The fiber grating sensor 2 may for example be a fiber bragg grating. A fiber bragg grating is a fiber containing a fiber section including a periodic variation of the refractive index therein. The fiber bragg grating reflects specific wavelengths of radiation while allowing other wavelengths to pass through in transmission. The periodic variation of the refractive index may be obtained by exposing the fiber to intense ultraviolet light in order to modify the refractive index of the core. Dependent on the periodicity of the structure and the profile of refractive index modulation, light incident on the grating will be reflected at a specific wavelength determined by the grating spacing and refractive index profile. A fiber bragg grating is a particular type of fiber grating sensor 2 that may be applied in some examples. Other types of fiber grating sensors 2 may likewise be interrogated using an exemplary optical sensor arrangement 1 as illustrated (in any of figures 1-4, or a different example thereof).

Fiber grating sensors are applied in many different types of applications, often as sensors in order to measure certain physical parameters that are able (dependent on how the fiber grating sensors are applied in a setup) to modify the periodicity. For example, strain or compression can be measured using a fiber grating sensor 2 by attaching the fiber grating sensor 2 such that it is stretched or compressed along its length under influence of strain. Likewise, temperature changes in a given material will give rise to stretching or compression of a fiber grating sensor 2. Vibrations or other dynamic variations in structures may be accurately monitored using these sensors as well.

The optical sensor arrangement 1 comprises a radiation source 3 for illuminating the fiber grating sensor 2 with an optical interrogation signal. The fiber grating sensor 2 reflects a specific wavelength (or small wavelength range) back into fiber 5-1. The part of an optical signal that is transmitted by the fiber grating sensor 2 is void of the reflected wavelength, and is transmitted into fiber 5-2. In figure 1, the fiber grating sensor 2 is interrogated in reflection. Thereto, fiber 4 receives the optical input signal from radiation source 3, and transmits the optical input signal via optical circulator 6 to the fiber grating sensor 2 via fiber 5-1. The optical signal fraction reflected by the fiber grating sensor 2 is returned to the circulator 6 and forms the output signal of the fiber grating sensor in reflection. This optical signal fraction is received from fiber 5-1 by circulator 6, and transmitted to a fiber 7. Fiber 7 conveys the reflected optical radiation (i.e. the output signal in reflection) from fiber grating sensor 2 towards an interferometer 17.

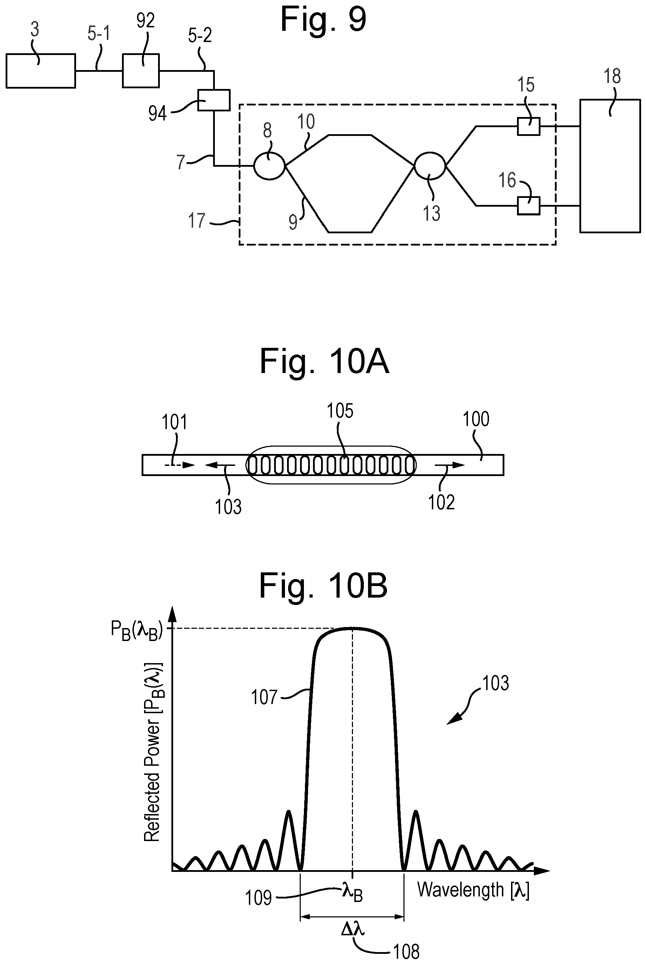

The optical conveyance structure (5-1, 5-2, 7) is configured for conveying the optical interrogation signal to the fiber grating sensor 2 and for conveying the optical output signal (such as the reflected signal in fiber 5-1) from the fiber grating sensor 2 to the interferometer 17. Alternatively or additionally, in some examples, the optical sensor arrangement 1 may also be connected to the interferometer 17 in transmission. This is for example very useful where the fiber grating sensor 2 is provided by, or includes or comprises, a phase shifted fiber bragg grating, such as for example illustrated in figure 9. It is also possible that both the reflected signal in fiber 5-1 and the transmitted signal in fiber 5-2 are conveyed to an interferometer such as interferometer 17, in order to analyze both. This may provide a more accurate determination of the reflected wavelength.

The interferometer 17 may be of any suitable type, for example a phase shifting type interferometer, such as a Mach-Zehnder interferometer, a Michelson interferometer, a Twyman-Green interferometer, a Fabry-Perot interferometer, or any other suitable interferometer. For example, the interferometer 17 may be a fiber based interferometer, to which fiber 7 may readily be connected. Interferometer 17 of the example illustrated in figure 1 is a two branch, fiber based Mach-Zehnder interferometer. The interferometer 17 comprises an optical splitter 8. The optical splitter 8 is configured for splitting the optical output signal into a first signal fraction and a second signal fraction. The interferometer 17 includes a first branch 9 for conveying the first signal fraction and a second branch 10 for conveying the second signal fraction. The first branch 9 and the second branch 10 are of different length such as to provide a path length difference (optical path difference (OPD)), establishing a phase difference between the first signal fraction and the second signal fraction. The interferometer 17 further comprises a beam combiner or coupler 13. The combiner 13 combines the first and second signal fractions from the first branch 9 and second branch 10 into a combined interference signal. The combined signal is conveyed, from combiner 13 into two branches that convey the signals to respectively a first detector 15 and a second detector 16. The signals received by detectors 15 and 16 may be analyzed using analyzer system 18, for enabling determination of the wavelength characteristics by the analyzer 18. For example, although not limited thereto, the outputs of the interferometer 17 may have a fixed offset in phase. While the change in the phase $\phi$ of the interference signal caused by the wavelength shift is the same in both the interferometer outputs 15 and 16.

The radiation source 3 is configured for providing the optical radiation signal that is conveyed to the fiber grating sensor 2. Advantageously, although optional, the optical radiation signal is comprised of multiple wavelengths. For example, the optical radiation signal comprises optical radiation at discrete wavelengths, preferably a plurality of discrete wavelengths. As described above, the signal may comprise a frequency comb signal. The plurality of discrete wavelengths include at least three wavelengths overlapping with a reflected signal spectral bandwidth of the fiber grating sensor 2. As a result, the phase noise level in the optical output signal will be significantly reduced due to the reduction of the beat noise between different wavelengths. This in turn improves the signal-to-noise ratio: because the phase noise level is lower, smaller phase differences become visible. For example, the use of an MLL results in a lower phase noise detectivity at the same visibility e.g. 0.5. Reducing the spectral bandwidth of the light from the grating by using PS-FBG will enable the usage of longer OPD in the detection interferometer. Since with an OPD of approximately the coherence length of the light, the visibility is about 0.5. So, the PS-FBG will have the same visibility (0.5) corresponding phase noise level. Due to the longer OPD, the wavelength to phase scale factor is larger (see Eq. 1). For the same phase noise, a smaller wavelength shift can be detected.

Suppose that based on the periodic structure, the fiber grating sensor 2 reflects an optical signal with wavelength $\lambda_0$ under normal conditions, e.g. at a given temperature while the fiber grating sensor 2 is relaxed, i.e. neither stretched nor compressed, when it is illuminated by an optical signal that includes this wavelength. Stretching the fiber grating sensor 2 will increase the reflected wavelength, e.g. from $\lambda_0$ to $\lambda_1$. The change in the reflected wavelength $\Delta\lambda_{FBG} = |\lambda_1 - \lambda_0|$ of the fiber grating sensor 2 will result in a phase difference that is measurable from the interference signal in the branch detectors 15 and 16 of the interferometer 17. The phase difference $\Delta\Phi$ is determined by the optical path difference OPD between branches 9 and 10, and by the wavelength X (say $\lambda=\lambda_0$, assuming that $\lambda_0 \gg \Delta\lambda_{FBG}$). In formula:

$$\Delta\phi = -\frac{2\pi\, OPD}{\lambda^2}\, \Delta\lambda_{FBG}$$

$$(eq.\ 1)$$

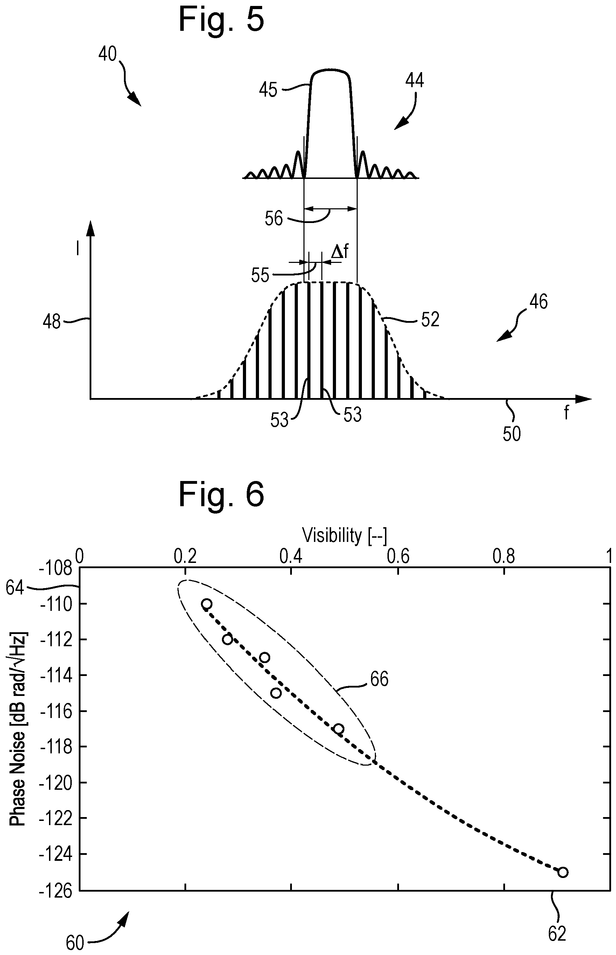

As follows from the above, making the OPD longer increases the phase difference $\Delta\Phi$ for the same $\Delta\lambda_{FBG}$ and thereby the detectability of the wavelength change. In addition, also at a smaller wavelength X and hence higher frequency, the phase difference $\Delta\Phi$ will be larger. However, increasing the OPD will also decrease the interferometric visibility V, which in turn determines the minimum detectable phase difference $\Delta\Phi_{min}$ of the system 1. Contributing to this, is that the phase noise level becomes larger at lower interferometric visibilities V. This is visualized by the graph of figure 6, showing several phase noise measurements 66 at low visibility, and the predicted relation with visibility V on a logarithmic scale. A further limit to the OPD is that in order to be able to measure the reflected optical signal from the fiber grating sensor 2, the OPD between branches 9 and 10 cannot be larger than the coherence length. The coherence length is determined by the spectral bandwidth of the fiber grating sensor 2. Thus although there is a desire to increase the OPD to obtain a large phase difference, the OPD is restrained by several physically determined limits.

In system 1 of figure 1, the radiation source 3 applied provides an optical input signal that comprises optical radiation at a plurality of discrete wavelengths. Due to the decreased level of phase noise, a lower phase difference $\Delta\Phi$ is measurable. As a result, the OPD may be increased. This will decrease the visibility V, but because the of the lower level of phase noise this will allow the phase difference $\Delta\Phi$ to remain measurable. As a result of the larger OPD, the obtained phase difference $\Delta\Phi$ for a certain wavelength difference $\Delta\lambda$ will increase. Therefore, smaller wavelength differences $\Delta\lambda$ will be measurable with system 1 of figure 1. In other words, the accuracy or resolution of the sensor increases.

In another example, illustrated in figure 2, the optical output signal of the fiber grating sensor 2 is filtered using a filter 20. Filter 20 is added in order to remove or suppress optical noise at undesired wavelength and optical signals from undesired sources, which may otherwise reach the detectors 15 and 16 and affect the measurement. For example, fiber grating sensor 2 will not reflect an optical signal outside its spectral bandwidth, which is a spectral range that is centered around the reflected wavelength $\lambda_0$. If the fiber grating sensor is stretched or compressed, the reflected wavelength will shift (e.g. as above from $\lambda_0$ to $\lambda_1$), and therefore also the spectral bandwidth of the reflected signal will shift. However, any signal does not bear relevant information on the wavelength shift of the fiber sensor as it is outside the achievable range will reduce the interferometer phase measurement quality if the reach the detectors 15 and 16. Therefore, these signals may be filtered from the optical output signal. Filter 20 may also or alternatively comprise filter elements that are configured for filtering or shaping signals wherein noise is expected or often encountered. Various filtering techniques are possible without departing from the general concepts described herein, and may be implemented accordingly.

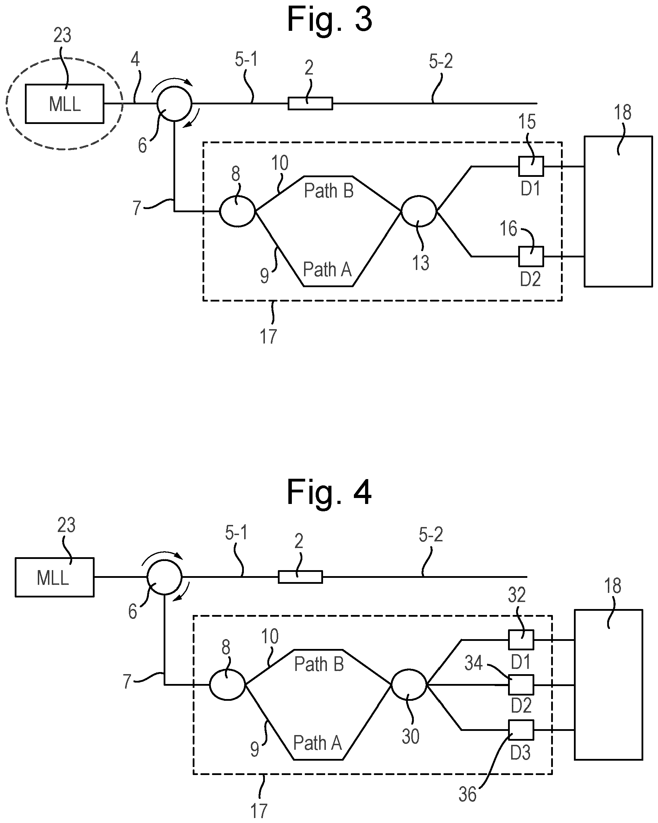

Figure 3 schematically illustrates another example, wherein a system 1 includes a mode-locked laser 23 as the radiation source for illuminating the fiber grating sensor 2. A mode-locked laser 23 enables to provide a frequency comb signal, including light at several discrete wavelengths that are equidistant in the optical frequency domain. This is schematically illustrated in figure 5, for example. Graph 40 is a schematic illustration of a frequency comb signal 46 provided by a mode-locked laser 23, wherein the vertical axis 48 provides the intensity of the optical signal and the horizontal axis 50 relates to the optical frequency thereof. The frequency comb signal 46 comprises a plurality of discrete wavelengths 53 that are equidistant in the frequency domain. The frequency difference is indicated as $\Delta f$ by reference numeral 55. Furthermore, the envelope 52 indicates the bandwidth of the mode-locked laser 23. Figure 5 illustrates how the optical signal of mode-locked laser 23 relates to the reflection signal spectral bandwidth 56 of the fiber grating sensor 2, showing the reflected signal 45 thereof in area 46 above the graph 40. As follows therefrom, within the reflection signal spectral bandwidth 56, the frequency comb signal 46 of mode-locked laser 23 provides several (here four) discrete wavelengths. The illustration is merely schematic, and typically or advantageously, a mode-locked laser 23 will provide a frequency comb signal that has much more discrete wavelengths within and outside the bandwidth 56. However, already with the number of discrete wavelengths of frequency comb signal 46 illustrated in figure 5, significant improvement is obtained in exemplary implementations.

Back to figure 3, the mode-locked laser 23 provides the input signal in a similar manner to the fiber grating sensor 2 as compared to the example of figure 1. Due to the significant reduction of beat noise in the signal by using the mode-locked laser, the phase noise level will be importantly reduced which thereby significantly improves the resolution of the system to measure the change in the wavelength of the grating sensor.

Figure 4 illustrates a further example wherein use is made of a three-branch or 3x3 type interferometer. In some examples, more than three branches may be applied. The time dependent intensity of the interference signal according to the phase $\phi$ and the phase offset (of $2\pi/3$ for a 3 output ports interferometer) between the detectors 32, 34 and 36 is well defined. For example, in the 3x3 Mach-Zehnder interferometer illustrated in figure 4, the signals received are as follows:

$$I_1(t) = A_0 \left( 1 + V \cos(\phi(t)) \right) \qquad (\text{eq. 2})$$

$$I_2(t) = A_0 \left( 1 + V \cos\left(\phi(t) + \frac{2\pi}{3}\right) \right) \qquad (\text{eq. 3})$$

$$I_3(t) = A_0 \left( 1 + V \cos \left( \phi(t) - \frac{2\pi}{3} \right) \right) \qquad \text{(eq. 4)}$$

$$\phi(t) = - arctan \left( \sqrt{3} \; \frac{I_1(t) - I_2(t)}{2I_3(t) - I_1(t) - I_2(t)} \right) \qquad \text{(eq. 5)}$$

From the above, the influence of changes in optical power $A_0$ and visibility V can be effectively suppressed, enabling accurate measurement of the shift in wavelength $\Delta\lambda$. In Eq. 2, 3 and 4, $\phi(t)$ is related to the OPD and the wavelength change via Eq. 1. Therefore, the OPD is used as a scale factor. For the same phase noise level (and hence the same visibility), a smaller wavelength can be measured by an interferometer with a longer OPD.

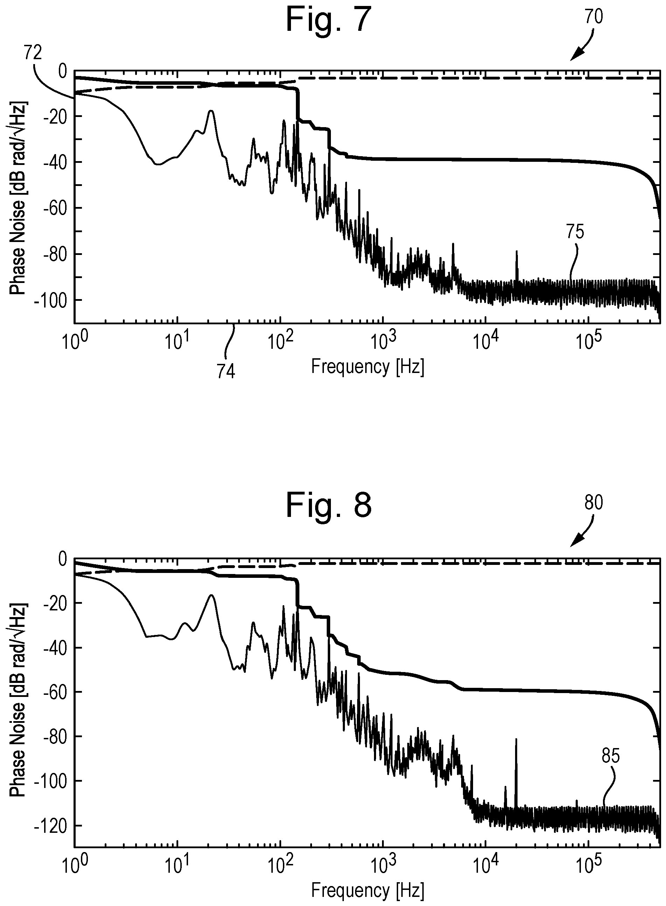

Figures 7 and 8 provide a comparison of the phase noise (presented in an Amplitude Spectral Density (ASD) plot) between two sensor systems, wherein in figure 7 the fiber grating sensor 2 is illuminated with a continuous wave laser beam and the reflected light is interrogated by an interferometer with an OPD selected to provide a visibility of about 0.5, and in figure 8 the fiber grating sensor 2 is illuminated with an optical input signal comprising discrete wavelengths (in the example of figure 8, a mode-locked laser 23 providing a frequency comb signal similar to signal 46 in figure 5) and the reflected light is interrogated by the same interferometer (i.e. with the same OPD). The phase noise level of the interference signal is illustrated on the vertical scale, which is a logarithmic scale. The horizontal scale is a logarithmic frequency scale (e.g. 74 in figure 7) Clearly, above 10 kHz, the phase noise level 85 in figure 8 is 20 dB less than the phase noise level 75 in figure 7. The phase signal with frequencies lower than ~10 kHz are phase generated by either variation in wavelength of the fiber grating and/or variation in the OPD of the interferometer. Both will result in a phase signal according to Eq. (1). In a practical application, the OPD of the interferometer needs to be stabilized (isolated from external vibration or temperature noise sources in the frequency band of interest for the specific application) by careful packaging of the fiber interferometer.

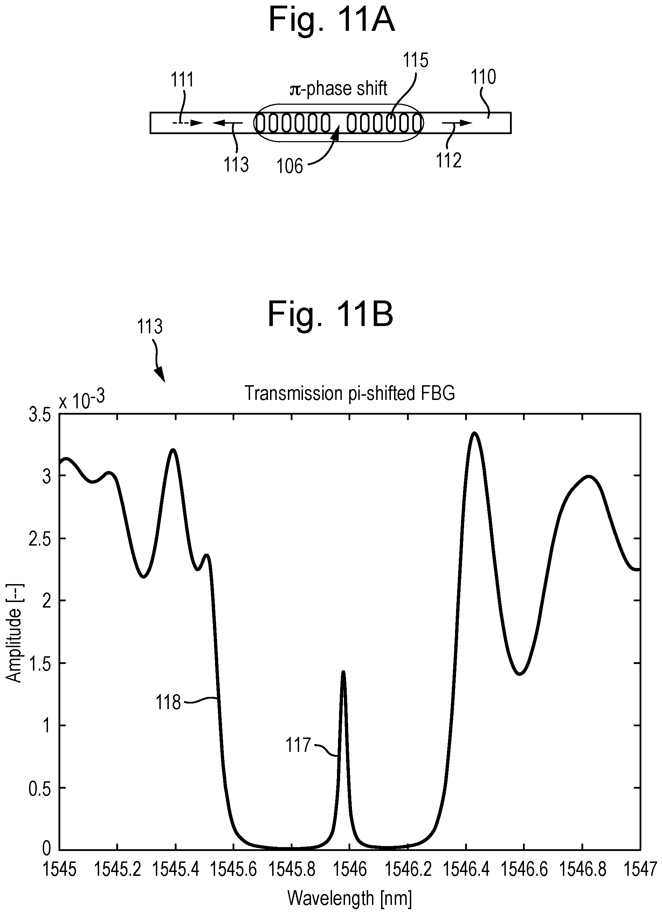

Figure 9 illustrates an example of a preferred sensor arrangement wherein the fiber grating sensor is a phase shifted fiber bragg grating 92. The principle of a phase shifted fiber bragg grating is illustrated with reference to figures 10A, 10B, 11A and 11B. In figure 10A, a regular fiber bragg grating 100 is illustrated schematically, with it's reflection spectrum illustrated in figure 10B. In regular fiber bragg grating 100, the refractive index of the fiber core is periodically modulated illustrated by modulations 105, acting as a wavelength-selective reflector. When light propagates through the fiber bragg grating 100, it experiences constructive interference at certain wavelengths, causing a significant reflection of those specific wavelengths while allowing other wavelengths to pass through in transmission. In the fiber bragg grating 100, a periodic structure of refractive index modulations 105 therefore causes at least a part of the incoming input signal 101 to be reflected back as reflection signal 103 (assuming the incoming light contains intensity at that specific wavelength). The reflected spectrum of the reflected optical output signal 103 is illustrated in figure 10B. All other wavelengths that are not reflected by the fiber bragg grating 100, will be transmitted as transmission output signal 102. As follows from figure 10B, a narrow wavelength band 107 will be reflected by the FBG 100 in the reflected optical output signal 103. The band 107 has a bandwidth of $\Delta\lambda$ 108 around the bragg wavelength $\lambda_B$. (Note: The bandwidth of the FBG reflection spectrum is in general specified as the FWHM. The FWHM or -3 dB bandwidth is also used to calculate the coherence length of the light which is used to define the OPD of the detection interferometer. Figure 10B refers to $\Delta\lambda$ instead of FWHM, but for comprehension of the concept it is to be noted that the terms full width at half maximum (FWHM) and $\Delta\lambda$ are interchangeable here. Furthermore, the FHWM of a conventional FBG used for sensing is typically around 100 pm. As discussed herein before the smaller the better for reasons of optical coherence.)

Figure 11A schematically shows a phase shifted fiber bragg grating 110, in particular a $\pi$-shifted fiber bragg grating 110. The phase shifted fiber bragg grating 110, like the regular fiber bragg grating 100, reflects a part of the incoming input signal 111 back as reflected output signal 113, and the rest is transmitted as transmission output signal 112. However, due to the anomaly or notch 106 in the periodic structure of refractive index modulations 115, a very narrow band 117 of wavelengths within the reflected wavelength band 118 of the reflection spectrum is not reflected by the phase shifted fiber bragg grating 110, but is transmitted instead within the transmitted optical output signal 112. This very narrow band 117 of wavelengths is so narrow that it may advantageously be used as output signal of the fiber grating sensor 92 (the equivalent of fiber grating sensor 2) in order to strongly reduce the wavelength shift noise level of the transmission peak 117. Due to the narrow bandwidth of the transmitted fraction 117 in comparison to the reflection bandwidth 118, a larger coherence length is achieved which allows the optical path difference to become larger. This improves the detectability of small wavelength shifts from the fiber grating sensor 92, because it increases the wavelength-to-phase scale factor of the interferometer 17 without diminishing the interferometric visibility (which would increase the phase noise) in view of the increased coherence length. Note, by the way, that the FWHM of this notch of 25 pm is readily obtainable . Even a notch of 1pm can be manufactured. Therefore the FWHM of 117 can be one to two orders of magnitude smaller than 118.

Therefore, in the example of figure 9, the sensor arrangement includes a phase shifted fiber bragg grating 92, which is interrogated in transmission. A filter unit 94 is added which removes the parts of the transmission spectrum that lies outside the reflected wavelengths of the spectral bandwidth of the FBG, such that only the narrow bandwidth 117 of the phase shifted fiber bragg grating 92 is transmitted to the interferometer 17. A highly accurate sensor arrangement is thereby achieved.

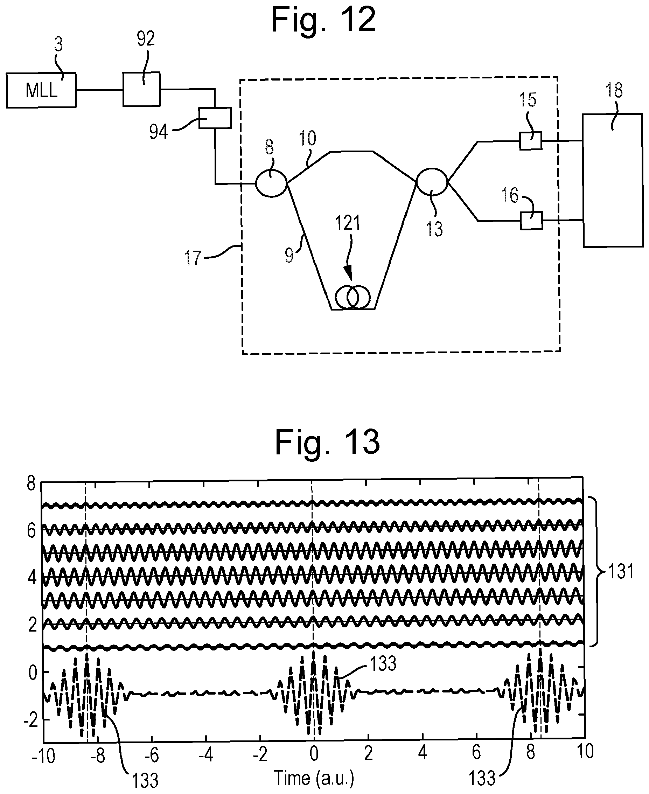

In the example of figure 12, the optical radiation source 3 is a mode-locked laser (MLL). In a mode-locked laser ultrashort pulses of optical radiation are generated by controlling the phases of the generated laser modes, creating a train of short and intense pulses by means of bursts obtained by constructive and destructive interference. The MLL has multiple wavelengths of which the mutual phases are interrelated (locked). The combination of these wavelengths results in a pulsed output in time of which the phase of the pulses are locked. Figure 13 shows an example of this principle. In figure 13, seven laser modes 131 are of slightly different, but equidistant frequencies. The vertical lines in the graph indicate the times at which all oscillations add up in phase (i.e. constructively interfere), resulting in the bursts 133 appearing at precisely equidistant points in time. In the earlier examples, e.g. as illustrated in figures 3, 4 and 9, an interferometer 17 is applied having an optical path difference between arms 9 and 10 which result in time delay that is shorter than the pulse width of the individual pulses 133. This results in the overlapping of the fractions of the pulse 133 that are conveyed by the two arms 9 and 10, after combining of radiation from the two interferometer arms 9 and 10, causing the interference within each optical pulse 133 between these fractions.

In the example of figure 12, the optical path length difference 121 between the longer and shorter path is approximately N times the fixed intermediate pulse distance between two subsequent pulses 133. By 'approximately N times' it is meant that the optical path length difference 121 is within a range between N times the fixed intermediate pulse distance and N times the fixed intermediate pulse distance plus or minus a coherence length of the fiber grating sensor 92. Herein N is an integer number that is greater than or equal to zero. The coherence length is inversely proportional to the spectral bandwidth of the optical output signal of the fiber grating sensor 2 (in other examples), which in the example of figure 12 where the fiber grating sensor 2 is provided by phase shifted fiber bragg grating 92 interrogated in transmission, is the bandwidth of the very narrow band 117 of figure 11B. For the record, please note that the illustrations in the figures are mostly schematic. Therefore, in reality it does not matter which of the two arms of the interferometer is longer and which is shorter. The optical path difference is an absolute value, regardless of which arm is the longest arm. Therefore, the value of N is a positive value in the present description, regardless of which arm is the longest arm. This, of course, is a matter of definition, which can be dealt with by the skilled person without requiring any further description here.

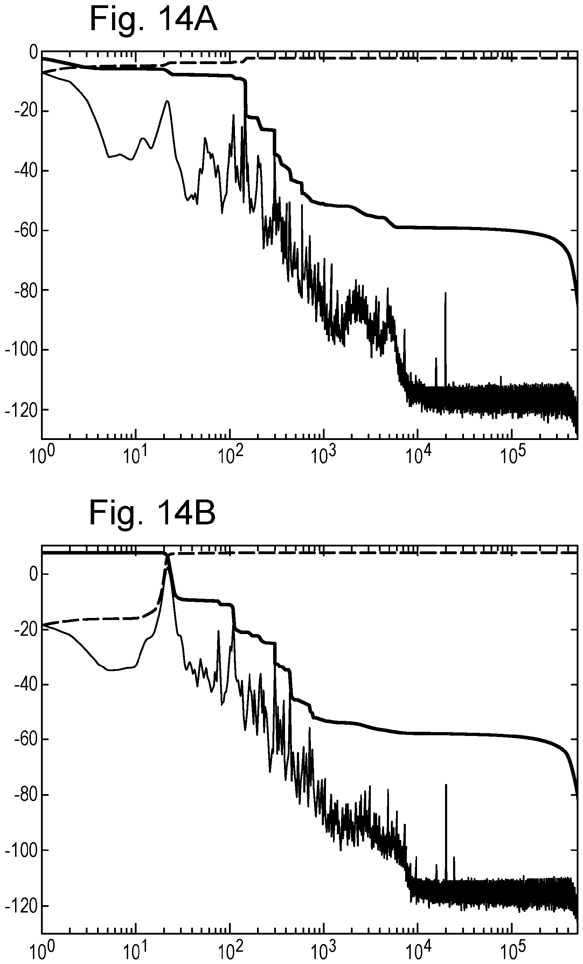

By providing the extended time delay using the large optical path difference 121, the example of figure 12 applies interference between different pulses 133 of the mode-locked laser 3. Because of the very constant equidistant frequencies that are relatively close to each other, the phases of the radiation modes have a constant relation resulting in very constant equidistant (in time) bursts forming the pulses 133. By applying interference between these different pulses 133, rather than within one pulse 133, the optical path difference 121 of the detection interferometer 17 is increased (from approximately the coherence length $L_{coh}$ in examples 3, 4 and 9) to an optical path length difference $OPD_N = N*L_{MLL}$ where N is 1, 2, 3, ... and the pulse distance $L_{MLL}$ is approximately $c*T_{MLL}$ with c the speed of light and $T_{MLL}$ the repetition time of the MLL pulses. More precisely, instead of the speed of light c in vacuum, the speed $v = c/n$ of radiation in the material of the applied fiber will determine $L_{MLL}$ (i.e. $L_{MLL} = v*T_{MLL} = c*T_{MLL}/n$), where n is the refractive index of the fiber material. For example, a system with a fiber bragg grating 92 with spectral bandwidth of ~ 32 pm may be interrogated by an interferometer with and optical path difference $OPD \sim L_{coh}$ **(=~33 mm).** Using a mode-locked laser 3 with 100 MHz pulses, the repetition time $T_{MLL}$ = 10 ns and therefore the fixed intermediate pulse distance $L_{MLL}$ = 3000 mm approximately. The OPD can be increased roughly by a factor one hundred, i.e. a significant increase. As a result, the phase shift to wavelength shift ratio provided by interferometer 17 will be much larger, and the sensitivity of the sensor arrangement is spectacularly increased. Figures 14A and 14B demonstrate, from an experiment, that the phase noise of the same phase shifted fiber bragg grating (PS-FBG) 92 with a 32 pm bandwidth of the transmitted fraction 117, is similar using an optical path difference of OPD = 41 mm (see figure 14A, wherein 41 mm is about the coherence length $L_{coh}$) as compared to an optical path difference of OPD = 3000+41 = 3041 mm (figure 14B). Interference between consecutive pulses to achieve same visibility of the interference signal is demonstrated.

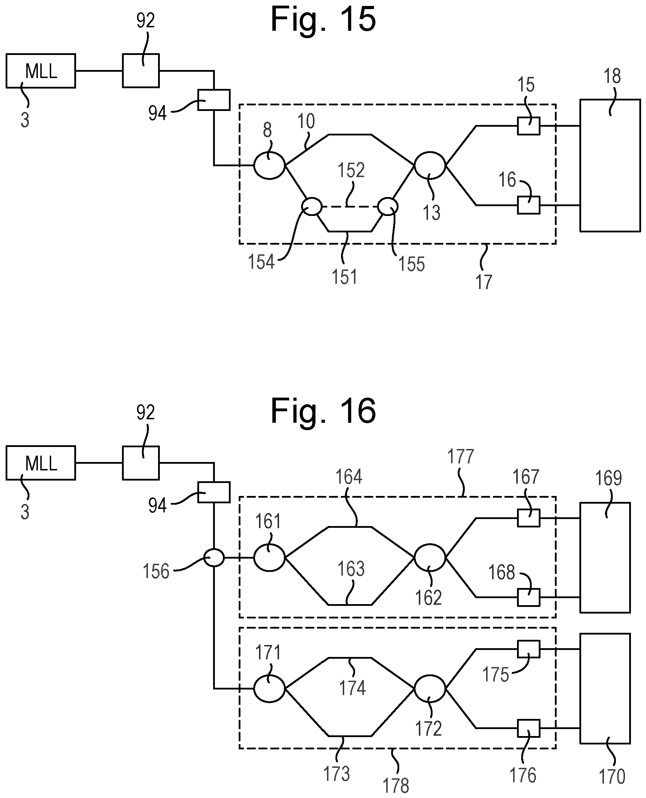

In other advantageous sensor arrangements, illustrated in figures 15 and 16, interferometers are applied that have been made switchable between different sensitivities. It is to be appreciated that the advantages obtained by the sensor arrangements in figures 15 and 16 may likewise be achieved by the other exemplary sensor arrangements discussed herein, and vice versa, because the interferometers discussed and their specific features are interchangeable for the most part between the various examples. Thus, the interferometer of figure 12 may include switching means 154 and 155 and a selectable arm 152 as illustrated in figure 15, as a non-limiting example. The teachings of this document should not be considered to be strictly limited to each of the examples, which would provide a too narrow reading of the teachings provided herein. In the example of figure 15, the interferometer 17 comprises a first arm 151 and a second arm 10, and an optical path length difference is present between the two arms 151 and 10 as discussed before. In addition, switching means 154 and 155 enable the length of the first arm to be selectable in order to change the path length difference of the interferometer 17. This may be done by switching, using switching means 154 and 155, the optical radiation fraction in the first arm via branch 152, which will shorten the OPD. An alternative implementation of this idea is illustrated in figure 16, wherein switching means 156 enable to convey the optical output signal coming from phase shifted fiber bragg grating 92 to be conveyed via either interferometer 177 or interferometer 178. The interferometers 177 and 178 each provide a two branch fiber based Mach-Zehnder interferometer. Please note that the switch 156 could also be replaced by a 50/50 splitter. In that configuration both output signals can be measured at exactly the same moment. When using a switch 156, detectors 167 and 168 could still be combined with 175 and 176 respectively. Same for analyzers 169 and 170.

The interferometer 177 comprises an optical splitter 161. The optical splitter 161 is configured for splitting the optical output signal into a first signal fraction and a second signal fraction. The interferometer 177 includes a first branch 163 for conveying the first signal fraction and a second branch 164 for conveying the second signal fraction. The first branch 163 and the second branch 164 are of different length such as to provide a path length difference (optical path difference (OPD)), establishing a phase difference between the first signal fraction and the second signal fraction. The interferometer 177 further comprises a beam combiner or coupler 162. The combiner 162 combines the first and second signal fractions from the first branch 163 and second branch 164 into a combined signal. The combined signal is conveyed, from combiner 162 into two branches that convey the signals to respectively a first detector 167 and a second detector 168. The signals received by detectors 167 and 168 may be analyzed using analyzer system 169, for enabling determination of the wavelength characteristics via the phase of the interference signal by the analyzer 169.

The interferometer 178 comprises an optical splitter 171. The optical splitter 171 is configured for splitting the optical output signal into a first signal fraction and a second signal fraction. The interferometer 178 includes a first branch 173 for conveying the first signal fraction and a second branch 174 for conveying the second signal fraction. The first branch 173 and the second branch 174 are of different length such as to provide a path length difference (optical path difference (OPD)), establishing a phase difference between the first signal fraction and the second signal fraction. The interferometer 178 further comprises a beam combiner or coupler 172. The combiner 172 combines the first and second signal fractions from the first branch 173 and second branch 174 into a combined signal. The combined signal is conveyed, from combiner 172 into two branches that convey the signals to respectively a first detector 175 and a second detector 176. The signals received by detectors 175 and 176 may be analyzed using analyzer system 170, for enabling determination of the wavelength characteristics via the phase of the interference signal by the analyzer 170.

The optical path length differences of interferometers 177 and 178 is different, and for example in interferometer 177 an OPD of approximately the coherence length may be applied while in interferometer 178 an OPD equal to the fixed intermediate pulse distance 121 (as in figure 12) in additional to approximately the coherence length may be applied. Same may be done in the example of figure 15. Furthermore, the examples of figures 15 and 16 are not limited to only two selectable options for the OPD, because additional interferometers or branches may be added if desired. In the example arrangement of figure 16, the interferometer to be applied may be selected using switching means 156. In the example sensor arrangement of figure 15, the branch 151 or 152 to be applied may be selected using switching means 154 and 155.

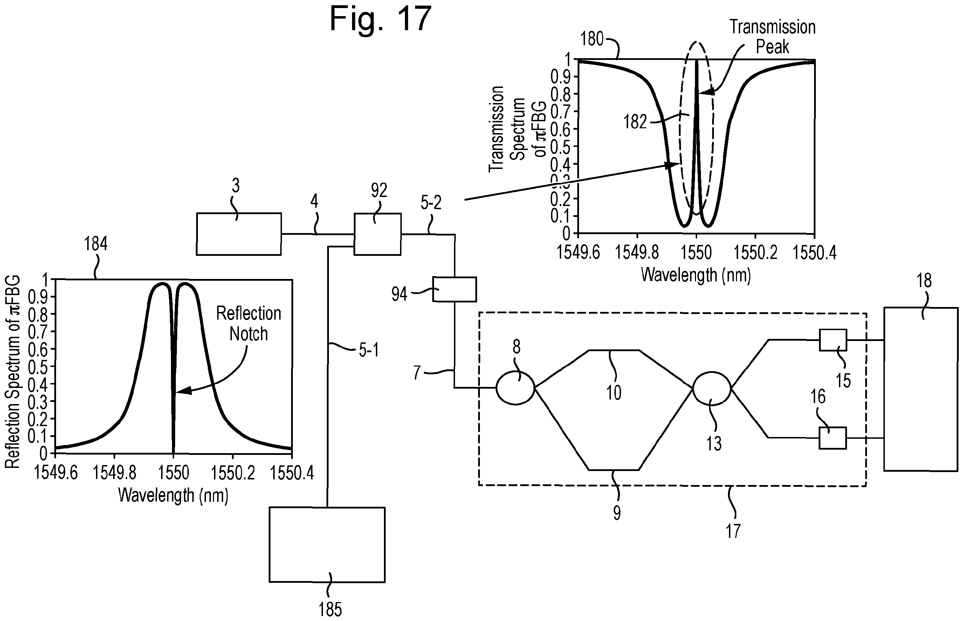

A further advantageous sensor arrangement is illustrated in figure 17. The example of figure 17 differs from the other examples, in that the fiber grating sensor 2 (here provided again by a phase shifted fiber grating sensor 92) is interrogated both in transmission and in reflection. In transmission, like in figures 9, 12, 15 and 16, a filter unit 94 is added which removes the parts of the transmission spectrum that lie outside the reflected wavelengths of the spectral bandwidth of the FBG 92, such that only the narrow bandwidth 117 of the phase shifted fiber bragg grating 92 is transmitted to the interferometer 17 via fiber 7. The interferometer again comprises an optical splitter 8. The optical splitter 8 is configured for splitting the optical output signal into a first signal fraction and a second signal fraction. The interferometer 17 includes a first branch 9 for conveying the first signal fraction and a second branch 10 for conveying the second signal fraction. The first branch 9 and the second branch 10 are of different length such as to provide a path length difference (optical path difference (OPD)), establishing a phase difference between the first signal fraction and the second signal fraction. The interferometer 17 further comprises a beam combiner or coupler 13. The combiner 13 combines the first and second signal fractions from the first branch 9 and second branch 10 into a combined interference signal. The combined signal is conveyed, from combiner 13 into two branches that convey the signals to respectively a first detector 15 and a second detector 16. The signals received by detectors 15 and 16 may be analyzed using analyzer system 18, for enabling determination of the wavelength characteristics via the phase of the interference signal by the analyzer 18. In reflection, branch 5-1 of the sensor arrangement of figure 17 leads to a second interrogator system 185. This could be any desired interrogator system for fiber bragg grating sensor, but preferably will be an interferometer similar to interferometer 17 of the present example or similar to the interferometer 17, 177 or 178 in the previous examples discussed above.

In figure 17, the transmission spectrum 180 coming from phase shifter fiber bragg grating 92 and conveyed via fiber 5-2, includes the very narrow transmission peak 182. Filter 94 only transmits the very narrow peak 182, filtering out the other parts of spectrum 180. The fraction of the optical output signal including peak 182 is transmitted to interferometer 17 for analysis thereof as described above. The reflected spectrum 184, containing that part of the optical input signal that is not transmitted by the phase shifter fiber bragg grating 92, is conveyed via fiber 5-1 to the second interrogator system 185.

Analysis of this reflected part 184 provides additional information in the wavelength shift of the spectrum 184 to be measured, and thereby allows to improve accuracy of the wavelength shift to be measured or to monitor the stability of the grating structure of the PS-FBG . The FWHM of the reflected spectrum 184 is larger than the narrow peak 182 and thus the coherence length shorter. As a consequence interrogator system 185 when using an interferometer will have a shorter OPD.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Expressions such as "consisting of", when used in this description or the appended claims, should be construed not as an exhaustive enumeration but rather in an inclusive sense of "at least consisting of". Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

**1.** Sensor arrangement for measuring a physical parameter, the sensor arrangement comprising a fiber grating sensor, and an optical sensor for interrogating the fiber grating sensor for determining a wavelength characteristic of an optical output signal obtained from the fiber grating sensor, wherein the fiber grating sensor comprises a fiber section including an internal structural periodicity comprising a repetition of structural periods of a same length such as to reflect, upon receiving an optical interrogation signal in use, optical radiation in a reflection spectral bandwidth around a reflection wavelength that corresponds with the length of the structural periods,

wherein the optical sensor comprises a radiation source for illuminating the fiber grating sensor with the optical interrogation signal, and an interferometer configured for receiving the optical output signal from the fiber grating sensor,

wherein the interferometer is configured for separating from the optical output signal a first signal fraction and a second signal fraction, the interferometer including one or more optical elements for establishing a phase difference between the first signal fraction and the second signal fraction, and wherein the interferometer is further configured for combining the first and second signal fraction into a combined signal, for providing the combined signal to at least one output port for enabling determination of the wavelength characteristic by an analyzer operatively connectable to the at least one output port;

wherein the fiber grating sensor is a phase shifted type fiber grating sensor wherein the internal structural periodicity comprises an interruption thereof, the interruption being provided by a deviation in at least one structural period, such as to enable the fiber grating sensor to transmit, upon receiving the optical interrogation signal, at least one fraction of the reflected optical radiation, wherein the at least one fraction comprises optical radiation in a transmission spectral bandwidth around a transmission wavelength that corresponds with the interruption.

**2.** Sensor arrangement according to claim 1, wherein the interruption of the phase shifted type fiber grating sensor comprises a divergent structural period, the divergent structural period including a disruption of the internal structural periodicity, such as one or more of: a continuous refractive index for transmitting optical radiation unhampered; a discontinuity of the refractive index such as a step or a kink.

3. Sensor arrangement according to at least one of claims 2, wherein at least one of:

the divergent structural period has a length equal to half of the length of the structural periods forming the internal structural periodicity, such that the phase shifted type fiber grating sensor is a $\pi$-shifted fiber grating sensor; or
the divergent structural period has a length which is less than the length of the structural periods forming the internal structural periodicity, such that the phase shifted type fiber grating sensor provides a phase-shift of less than $2\pi$; or
the interruption of the phase shifted type fiber grating sensor comprises two or more divergent structural period, wherein each divergent structural period includes a disruption of the internal structural period, wherein each divergent structural period has a different length which is less than the length of the structural periods forming the internal structural periodicity, such as to enable the fiber grating sensor to transmit, upon receiving the optical interrogation signal, two or more fractions of the reflected optical radiation.

4. Sensor arrangement according to any one or more of the preceding claims, wherein the fiber grating sensor is configured for reflecting, upon receiving the optical interrogation signal in use, optical radiation at a plurality of reflection wavelengths in a spectral bandwidth of the fiber grating sensor, wherein the sensor arrangement further comprises an optical wavelength filter, the optical wavelength filter being configured for transmitting a wavelength range within the spectral bandwidth of the fiber grating sensor.

5. Sensor arrangement according to any one or more of the preceding claims, wherein the interferometer is operatively connected to an output side of the fiber grating sensor such as to obtain, as the optical output signal, a transmitted signal from the fiber grating sensor comprising optical radiation which is void of the reflection wavelength.

6. Sensor arrangement according to claim 5, further comprising a further interferometer which is operatively connected to an input side of the fiber grating sensor such as to obtain, as a reference signal of the optical output signal, a reflected signal from the fiber grating sensor comprising optical radiation which comprises the reflection wavelength.

7. Sensor arrangement according to any one or more of the preceding claims, wherein the radiation source is configured for providing an optical radiation signal comprising optical radiation at a plurality of discrete wavelengths, wherein the plurality of discrete wavelengths include at least three wavelengths overlapping with the spectral bandwidth of the fiber grating sensor; or preferably, wherein the plurality of discrete wavelengths include at least three wavelengths overlapping with the transmission spectral bandwidth of the transmitted fractions of the phase shifted fiber grating sensor.

8. Sensor arrangement according to claim 7, wherein the radiation source comprises a mode locked laser.

9. Sensor arrangement according to claim 8, wherein the interferometer includes a first branch for conveying the first signal fraction and a second branch for conveying the second signal fraction, wherein the first branch and the second branch are of different length such as to establish a path length difference between the first signal fraction and the second signal fraction, and

wherein the mode locked laser is configured for providing laser pulses at a fixed pulse repetition frequency, such that subsequent laser pulses are spatially separated by a fixed intermediate pulse distance;
wherein the path length difference is within a range between N times the fixed intermediate pulse distance and N times the fixed intermediate pulse distance plus or minus a coherence length of the fiber grating sensor, wherein N is an integer number that is greater than or equal to zero, wherein the coherence length is inversely proportional to the spectral bandwidth of the optical output signal received by the interferometer.

10. Sensor arrangement according to any one or more of the preceding claims, wherein the interferometer includes a first branch for conveying the first signal fraction and two or more second branches for conveying the second signal fraction, wherein each of the two or more second branches is of a length different from the first branch and different from each further second branch of the two or more second branches, and wherein the sensor arrangement comprises switching means for switching the second switching fraction to one of the two or more second branches.

11. Sensor arrangement according to any one or more of the preceding claims, wherein the sensor arrangement comprises a plurality of fiber grating sensors, the plurality of fiber grating sensors forming a sensor array, wherein each fiber grating sensor of the plurality of fiber grating sensors is configured for reflecting, in use, optical radiation at an individual reflection wavelength associated with said fiber grating sensor, and wherein the sensor arrangement further comprises a filter arrangement configured for filtering the output signal and for selectively transmitting a wavelength range overlapping with one of the individual reflection wavelengths, for enabling selective interrogation of each of the plurality of fiber grating sensors.

12. Sensor arrangement according to any one or more of the preceding claims, wherein the analyzer is configured for determining a wavelength shift of the reflected wavelength or transmitted wavelength in use, for enabling dynamic measurement of the physical parameter, such as for enabling detection of ultrasonic waves.

13. Sensor arrangement according to any one or more of the preceding claims, wherein the physical parameter is at least one of: strain; compression; deformation; temperature; vibration, such as acoustic vibration; or pressure.

14. Use of a sensor arrangement according to any one or more of the preceding claims, for determining a wavelength shift of the reflected or transmitted wavelength of a fiber grating sensor, for enabling dynamic measurement of the physical parameter, such as for enabling detection of ultrasonic waves.

15. Method of measuring a physical parameter using a sensor arrangement, wherein the sensor arrangement comprises a fiber grating sensor, and an optical sensor for interrogating the fiber grating sensor for determining a wavelength characteristic of an optical output signal obtained from the fiber grating sensor, wherein the fiber grating sensor comprises a fiber section including an internal structural periodicity comprising a repetition of structural periods of a same length such as to reflect, upon receiving an optical interrogation signal in use, optical radiation at a reflection wavelength that corresponds with the length of the structural periods, wherein the method comprises interrogating the fiber grating sensor for measuring said physical parameter, wherein the step of interrogating comprises:

illuminating, with a radiation source, the fiber grating sensor with the optical interrogation signal;
receiving, by an interferometer, the optical output signal from the fiber grating sensor;
separating, by the interferometer, from the optical output signal, a first signal fraction and a second signal fraction;
establishing, by the interferometer using one or more optical elements, a phase difference between the first signal fraction and the second signal fraction;
combining, by the interferometer, the first and second signal fraction into a combined signal, and providing the combined signal via at least one output port to an analyzer;
determining, by the analyzer, the wavelength characteristic for measuring the physical parameter;
wherein, for enabling the measurement, the fiber grating sensor is a phase shifted type fiber grating sensor wherein the internal structural periodicity comprises an interruption thereof, the interruption being provided by a deviation in at least one structural period.

16. Method according to claim 15, wherein the radiation source is a mode locked laser.

# Fig. 1

# Fig. 2

# Fig. 3

# Fig. 4

# Fig. 5

# Fig. 6

## Fig. 7

## Fig. 8

# Fig. 9

# Fig. 10A

# Fig. 10B

# Fig. 11A

# Fig. 11B

Transmission pi-shifted FBG

# Fig. 12

# Fig. 13

## Fig. 14A

## Fig. 14B

# Fig. 15

# Fig. 16

# Fig. 17

EP 4 538 650 A1

**Europäisches Patentamt**
**European Patent Office**
**Office européen des brevets**

# EUROPEAN SEARCH REPORT

Application Number

EP 23 20 2764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/048337 A1 (WANG CHEN [CN] ET AL) 18 February 2021 (2021-02-18) | 1-4, 11-16 | INV. G01D5/353 |
| A | * paragraph [0029] – paragraph [0049]; figures 1-5 * | 5-10 | |
| A | US 2021/010834 A1 (SHANG YING [CN] ET AL) 14 January 2021 (2021-01-14) * the whole document * | 1-16 | |
| A | US 2023/304832 A1 (WANG YINGLONG [CN] ET AL) 28 September 2023 (2023-09-28) * the whole document * | 1-16 | |

TECHNICAL FIELDS SEARCHED (IPC)

G01D
G01W
G01K

The present search report has been drawn up for all claims

| Place of search | Date of completion of the search | Examiner |
|---|---|---|
| Munich | 6 March 2024 | Lyons, Christopher |

EPO FORM 1503 03.82 (P04C01)

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................
& : member of the same patent family, corresponding
  document

**EP 4 538 650 A1**

## ANNEX TO THE EUROPEAN SEARCH REPORT
## ON EUROPEAN PATENT APPLICATION NO.

EP 23 20 2764

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | Publication date | Patent family member(s) | Publication date |
|---|---|---|---|
| US 2021048337 A1 | 18-02-2021 | CN 110440900 A <br> FR 3099952 A1 <br> US 2021048337 A1 | 12-11-2019 <br> 19-02-2021 <br> 18-02-2021 |
| US 2021010834 A1 | 14-01-2021 | CN 110160573 A <br> FR 3098659 A1 <br> US 2021010834 A1 | 23-08-2019 <br> 15-01-2021 <br> 14-01-2021 |
| US 2023304832 A1 | 28-09-2023 | GB 2612237 A <br> US 2023304832 A1 <br> WO 2022006702 A1 | 26-04-2023 <br> 28-09-2023 <br> 13-01-2022 |

For more details about this annex : see Official Journal of the European Patent Office, No. 12/82

EPO FORM P0459